# EUROPÄISCHE PATENTANMELDUNG

(11) **EP 3 072 574 A1**
(43) Veröffentlichungstag der Anmeldung: **28.09.2016**
(21) Anmeldenummer: 15161486.4
(22) Anmeldetag: 27.03.2015
(51) Int. Cl.: B01D 53/18, B01D 3/26, B01J 19/24, F28C 1/04

(54) **VORRICHTUNG UND VERFAHREN ZUM IN-KONTAKT-BRINGEN EINES GASES MIT EINER FLÜSSIGKEIT**

(71) Anmelder: AWS Group AG, 74076 Heilbronn (DE)
(72) Erfinder: Pfutterer, Matthias, 74076 Heilbronn (DE); Hermann, Stefan, 74076 Heilbronn (DE)
(74) Vertreter: Glawe, Delfs, Moll

(57) **Zusammenfassung**

Die Erfindung betrifft eine Vorrichtung und ein Verfahren zum In-Kontakt-Bringen eines Gases mit einer Flüssigkeit. Die Flüssigkeit wird von einer oberen Halterung (2) über eine Anzahl an porösen Hohlprofilen (1) zu einer unteren Halterung (3) geleitet.

Dabei fließt die Flüssigkeit von der oberen Halterung (2) in den Innenraum der porösen Hohlprofile (1). Die unteren Enden der porösen Hohlprofile sind verschlossen, so dass die Flüssigkeit nur durch die porösen Wandungen der Hohlprofile austreten kann. Zum gleichmäßigeren Verteilen der Flüssigkeit über die porösen Hohlprofile ist mindestens eine Brausevorrichtung über der oberen Halterung (2), ein flächiges Flüssigkeitsverteilungsmittel auf der oberen Halterung (2), Drosselmittel an den oberen Enden der porösen Hohlprofile (1) oder Drosselmittel an den porösen Hohlprofilen (1) im Bereich zwischen den oberen und unteren Enden der Hohlprofile (1) vorgesehen.

## Beschreibung

Die Erfindung betrifft eine Vorrichtung und ein Verfahren zum In-Kontakt-Bringen eines Gases mit einer Flüssigkeit. Insbesondere betrifft die Erfindung eine Vorrichtung zum In-Kontakt-Bringen eines Gases mit einer Flüssigkeit, die eine Anordnung einer Anzahl an porösen Hohlprofilen, die zwischen einer oberen Halterung mit einer Bodenfläche zur Zufuhr der Flüssigkeit und einer unteren Halterung zum Ablauf der Flüssigkeit angebracht sind, umfasst, sowie ein Verfahren zum In-Kontakt-Bringen eines Gases mit einer Flüssigkeit, bei dem die Flüssigkeit durch eine solche Vorrichtung fließt, so dass die Anzahl an porösen Hohlprofilen mit der Flüssigkeit benetzt werden, und das Gas an der Anzahl an flüssigkeitsbenetzten porösen Hohlprofilen vorbeiströmt.

Das In-Kontakt-Bringen eines Gases mit einer Flüssigkeit kann zum Übertritt von Wärme und/oder Substanzen aus dem Gas in die Flüssigkeit und/oder umgekehrt genutzt werden. Der Substanzübertritt kann mit chemischen Reaktionen zwischen Gas (oder Gasbestandteilen) und Flüssigkeit (oder Flüssigkeitsbestandteilen) einhergehen.

Ein Beispiel für das In-Kontakt-Bringen eines Gases mit einer Flüssigkeit ist die Luftreinigung, bei der Luftverunreinigungen (Schadstoffe) durch In-Kontakt-Bringen von verunreinigter Luft mit einer geeigneten Absorbenslösung aus der Luft entfernt werden, also Substanzen aus dem Gas in die Flüssigkeit übertreten (Absorption in der Flüssigkeit). Umgekehrt kann man auch Substanzen aus der Flüssigkeit in das Gas übertreten lassen, also eine Desorption durchführen. Stattdessen oder gleichzeitig kommt es immer dann zu einem Wärmeübergang zwischen Gas und Flüssigkeit, wenn diese sich in ihrer Temperatur unterscheiden. Ein Temperaturunterschied kann dabei auch durch Substanzübertritt (etwa Verdunstung der Flüssigkeit) oder chemische Reaktionen zwischen Gas und Flüssigkeit hervorgerufen werden.

Eine Luftreinigung kann durch ein Luftreinigungsgerät gemäß WO 2004/008034 A1 ausgeführt werden. Dieses Luftreinigungsgerät kann flüchtige Substanzen aus Luft durch eine Nassfiltervorrichtung entfernen, in der die Luft im Kreuzstrom an einer Vielzahl von porösen Hohlprofilen, nämlich gewirkten Kunststoffschläuchen, vorbeigeführt wird, die mit einem Film einer Absorbensflüssigkeit benetzt sind, die an den Schlauchoberflächen herabrinnt. Eine der Nassfiltervorrichtung im Luftreinigungsgerät ähnliche Vorrichtung und ein zugehöriges Verfahren sind in US 3,748,828 offenbart, allerdings unter Verwendung von Fäden anstelle der Kunststoffschläuche. Die flüchtigen Substanzen lösen sich im Absorbens und werden so aus der Luft entfernt. Dieses Luftreinigungsgerät umfasst somit eine Vorrichtung gemäß dem Oberbegriff von Anspruch 1.

Die Erfinder haben sich ausgehend von diesem Stand der Technik die Aufgabe gestellt, die Effizienz des Kontakts zwischen Gas und Flüssigkeit und somit auch die Effizienz des Substanzübertritts, etwa der Reinigungswirkung eines Luftreinigungsgeräts, zu erhöhen. Dabei haben sie erkannt, dass die Verteilung der Flüssigkeit über die Kunststoffschläuche verbessert werden kann. Insbesondere bei einem Flüssigkeitsstrom durch die Vorrichtung, der unter dem maximal möglichen Flüssigkeitsstrom liegt, wird die Flüssigkeit durch die bekannte Vorrichtung nicht gleichmäßig auf alle Kunststoffschläuche verteilt. Zusätzlich sind die Kunststoffschläuche nicht über die gesamte Außenlänge, die mit dem Gas in Kontakt kommen kann, gleichmäßig mit der Flüssigkeit benetzt, insbesondere bei größeren Längen der Kunststoffschläuche. Weiterhin ist der Austausch von Flüssigkeit zwischen dem Innenraum der Kunststoffschläuche und ihrer Außenseite teilweise sehr gering. All dies führt zu einer ungleichmäßigen Verteilung der Flüssigkeit über die benetzten Außenflächen der Kunststoffschläuche und verringert dadurch die Effizienz des Kontakts zwischen Gas und Flüssigkeit.

Dieses Problem der ungleichmäßigen Flüssigkeitsverteilung und der resultierenden verringerten Effizienz wird durch die Vorrichtung gemäß Anspruch 1 und das Verfahren gemäß Anspruch 7 gelöst.

Die Hohlprofile sind bevorzugt gestrickte oder geflochtene Schläuche, die bevorzugt aus thermoplastischem Kunststoff, etwa Polyester oder Polyamid, hergestellt sind und durch eine Wärmebehandlung stabilisiert sein können.

Dabei kann eine Brausevorrichtung zum gleichmäßig verteilten Zuführen der Flüssigkeit auf die innere Bodenfläche der oberen Halterung und/oder ein flächiges Flüssigkeitsverteilungsmittel auf der inneren Bodenfläche der oberen Halterung zu einer gleichmäßigeren Verteilung der Flüssigkeit auf die einzelnen porösen Hohlprofile (z. B. Schläuche) führen, sodass der Flüssigkeitsstrom zwischen den einzelnen Hohlprofilen weniger variiert, d. h. jedes Hohlprofil optimalerweise im wesentlichen von demselben Volumenstrom an Flüssigkeit durchströmt wird. Die Brausevorrichtung hat bevorzugt eine Austrittsfläche für die Flüssigkeit, die von 70 bis 100 % der Fläche der Bodenfläche der oberen Halterung beträgt. Das flächige Flüssigkeitsverteilungsmittel kann etwa ein flüssigkeitsdurchlässiger Schaumstoff, bevorzugt ein offenporiger Schaumstoff, etwa aus Polyurethan (PU), ein Filz- oder Vliesmaterial, etwa aus organischen oder mineralischen Fasern, oder eine Schüttung von feinen bis mittleren Partikeln, bevorzugt kugelähnlicher Form, sein, wobei gegebenenfalls eine Gaze oder ein feines Netz oder Gitter verhindert, dass die Partikel in die Hohlprofile gelangen können.

Ein ähnlicher Effekt kann alternativ oder zusätzlich durch Drosselmittel an den oberen Enden der Anzahl an porösen Hohlprofilen, die den Eintrittsquerschnitt der oberen Enden der Anzahl an porösen Hohlprofilen verringern, erreicht werden. Als Drosselmittel können etwa eine Anzahl an Kegeln oder Kegelstümpfen verwendet werden, deren dünneres Ende in den Einlauf der einzelnen Hohlprofile passt und deren dickeres Ende einen größeren Durchmesser als den Innendurchmesser der Eintrittsöffnung der Hohlprofile aufweist. Diese Drosselmittel können etwa gemeinsam so an der Unterseite eines Trägers (z. B. einer Platte) befestigt sein, dass über der Eintrittsöffnung jedes der Anzahl an Hohlprofilen ein entspechendes Drosselmittel angeordnet ist, sodass durch Höhenverstellung des Trägers eine Verstellung der Drosselung möglich ist. Alternativ können Drosselmittel in jede Eintrittsöffnung der Anzahl an Hohlprofilen eingesteckt werden, etwa Einsteckhülsen, die den Eintrittsquerschnitt gegenüber dem Innenquerschnitt der Hohlprofile um mindestens 10 %, bevorzugt mindestens 30 % verringern. Durch die Drosselmittel kann auch bei geringen Flüssigkeitsströmen ein Aufstauen der Flüssigkeit über der Bodenfläche der oberen Halterung zur Zufuhr der Flüssigkeit erreicht werden, was zu einer gleichmäßigeren Verteilung der Flüssigkeit auf die einzelnen Hohlprofile führt. Ein solcher Aufstaueffekt kann auch durch das flächige Flüssigkeitsverteilungsmittel auf der inneren Bodenfläche der oberen Halterung bewirkt werden.

Drosselmittel an der Anzahl an porösen Hohlprofilen im Bereich zwischen den oberen und den unteren Enden können zu einer gleichmäßigeren Flüssigkeitsverteilung über die Länge der Hohlprofile führen, indem, bevorzugt mehrfach in regelmäßigen Abständen, Flüssigkeit im Inneren des Hohlprofils aufgestaut und somit vermehrt zum Durchtritt durch die porösen Wandungen des Hohlprofils an die Außenfläche des Hohlprofils geleitet wird. Für diese Art von Drosselmittel können Verdrängungskörper im Innenraum des Hohlprofils verwendet werden, entweder im wesentlichen über die gesamte Länge des Hohlprofils, dann bevorzugt derart, dass der Innenraum nur teilweise in der Querrichtung ausgefüllt ist, oder nur in Teilbereichen der Hohlprofillänge, dann mit einem solchen Durchmesser, dass die Verdrängungskörper von den Hohlprofilen festgeklemmt werden, bevorzugt an mehreren gleichmäßig beabstandeten Stellen. Geeignet sind insbesondere Stäbe oder Drähte bzw. Teilstücke davon. Verdrängungskörper, die sich im wesentlichen über die gesamte Länge des Hohlprofils erstrecken, können zusätzlich ein oder mehrere, bevorzugt gleichmäßig beabstandete, Verdickungen aufweisen. Als Drosselmittel, die nur in Teilbereichen der Hohlprofillänge wirken, können auch Verjüngungen der Hohlprofile dienen, bevorzugt an mehreren gleichmäßig beabstandeten Stellen, die etwa durch Quetschen oder thermische Erweichung erzeugt werden können. Diese Drosselmittel im Bereich zwischen den oberen und den unteren Enden können zudem auch einen Aufstaueffekt auf der Bodenplatte wie die zuvor beschriebenen Drosselmittel an den oberen Enden der Anzahl an porösen Hohlprofilen bewirken.

### Kurze Beschreibung der Zeichnungen

Fig. 1 zeigt eine schematische perspektivische Ansicht einer erfindungsgemäßen Vorrichtung zum In-Kontakt-Bringen eines Gases mit einer Flüssigkeit.
Fig. 2a bis 2e zeigen jeweils einen Querschnitt eines Teil der oberen Halterung in verschiedenen Ausführungsformen, nämlich

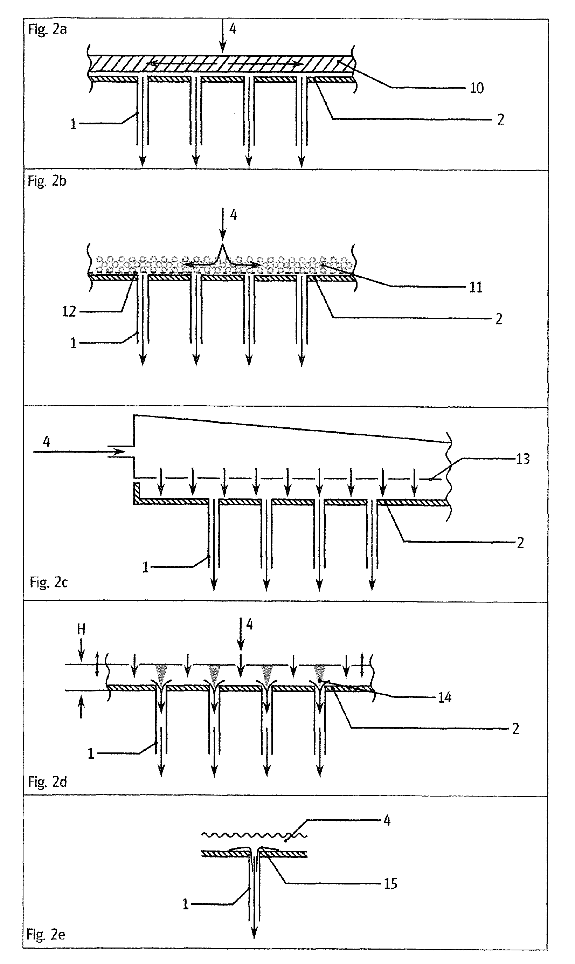

Fig. 2a mit Schaumstoff,
Fig. 2b mit Schüttung,
Fig. 2c mit Brausevorrichtung,
Fig. 2d mit Kegeln und
Fig. 2e mit Einsteckhülse.

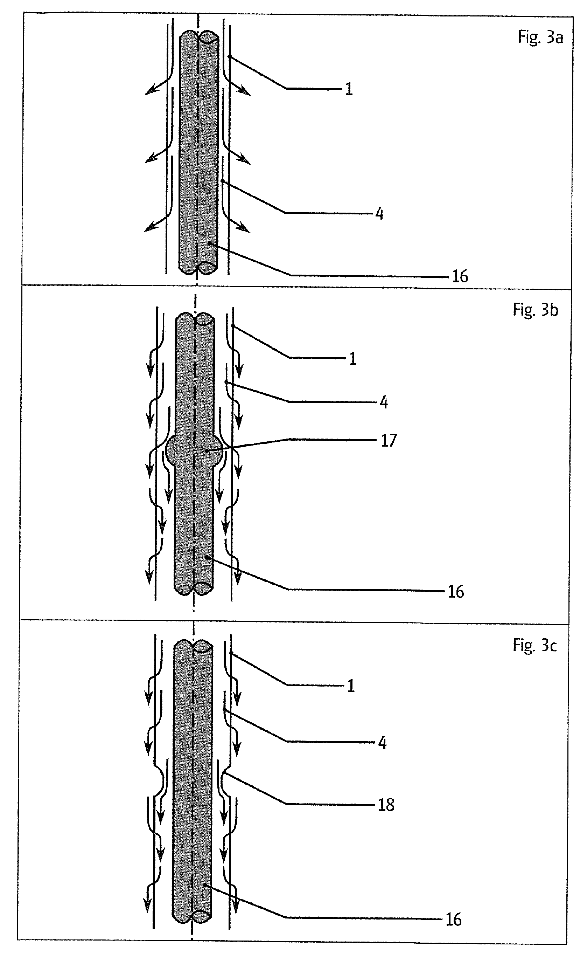

Fig. 3a bis 3c zeigen jeweils einen Querschnitt eines Teil des Hohlprofils in verschiedenen Ausführungsformen, nämlich
Fig. 3a mit Verdrängungskörper,
Fig. 3b mit Verdrängungskörper mit Verdickung und
Fig. 3c mit Verdrängungskörper und Verjüngung im Hohlprofil.

### Beschreibung der Ausführungsformen

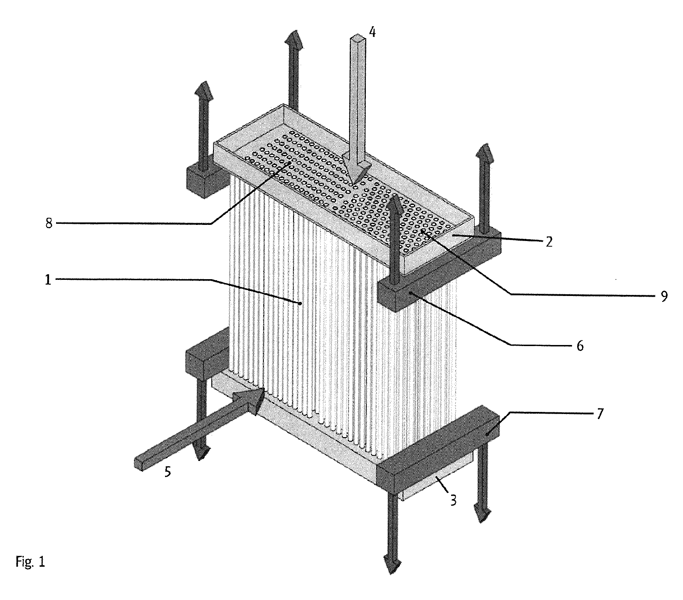

Fig. 1 zeigt ein Beispiel für eine erfindungsgemäße Vorrichtung zum In-Kontakt-Bringen eines Gases mit einer Flüssigkeit. Eine Anzahl an porösen Hohlprofilen **1** sind zwischen einer oberen Halterung **2** mit einer Bodenfläche zur Zufuhr der Flüssigkeit **4** und einer unteren Halterung **3** zum Ablauf der Flüssigkeit angebracht. Die obere Halterung **2** kann etwa kasten- oder wannenförmig ausgebildet sein und weist an ihrer Bodenplatte Aufnahmeöffnungen für die Hohlprofile **1** auf, die gleichzeitig ermöglichen, dass das Absorbens aus der oberen Halterung in die Hohlprofile **1** gelangen kann, um dort nach teilweisem Durchtritt durch die porösen Wandungen der Hohlprofile **1** einen Flüssigkeitsfilm auf den Außenflächen der Hohlprofile **1** zu bilden. Die untere Halterung **3** kann ähnlich wie die obere Halterung **2** gestaltet sein, muss jedoch in der Lage sein, neben der Halterung der Hohlprofile **1** auch den Ablauf der Flüssigkeit zu ermöglichen. Die Bodenplatten der Halterungen **2** und **3** sind bevorzugt Lochplatten, die bevorzugt eine rechteckige Form haben und waagerecht angeordnet werden. Die waagerechte Anordnung der Bodenplatte der oberen Halterung **2** ist für eine gleichmäßige Flüssigkeitsverteilung vorteilhaft. Die Hohlprofile **1** werden etwa durch Verklebung, Verschweißung oder Klemmung an den Lochplatten befestigt und zwischen den Halterungen **2** und **3** so gespannt, dass sie auch bei Anströmung mit Gas **5** nicht zu weit ausgelenkt werden. Die Spannkraft zwischen den Halterungen **2** und **3** kann z. B. durch Lager **6** und **7** aufgenommen werden. An der oberen Halterung **2** wird Flüssigkeit **4** in das Innere der Hohlprofile **1** eingeleitet, die dann durch die porösen Wandungen an die Außenseite der Hohlprofile **1** gelangen kann. An der unteren Halterung **3** ist das untere Ende des Hohlprofils **1** verschlossen, so dass die Flüssigkeit **4** im Inneren des Hohlprofils **1** durch die Wandung nach außen fließen muss.

Als Hohlprofile **1** können z.B. Schläuche oder Rohre verwendet werden. Bevorzugt werden gestrickte oder geflochtene Kunststoffschläuche verwendet, die bevorzugt aus Thermoplasten, z.B. Polyester, Polyamid, Polyethylen, Polypropylen, bestehen. Besonders geeignet ist Polyester. Die gestrickten oder geflochtenen Kunststoffschläuche können aus einem oder mehreren Filamenten gebildet sein, bevorzugt aus mehreren Filamenten. Bevorzugt werden die gewirkten Kunststoffschläuche durch eine thermische Behandlung, die etwa zu einem teilweisen Zusammenschmelzen oder Zusammensintern der Filamente, gegebenenfalls unter Schrumpfung, führt, mechanisch stabiler gemacht (die Herstellung solcher Schläuche ist z. B. in der DE 42 33 827 C2 beschrieben). Dadurch werden die ursprünglich meist biegeschlaffen Kunststoffschläuche formstabiler und zeigen eine gewisse Eigensteifigkeit und Biegeelastizität. Sie bleiben aber porös, so dass es im Betrieb der Vorrichtung zu einem vorteilhaften Flüssigkeitsaustausch zwischen der Innenseite und der Außenseite der Kunststoffschläuche kommt, der sowohl die Fließgeschwindigkeit des Flüssigkeitsfilms verringert als auch eine gute Durchmischung der Flüssigkeit und eine Selbstreinigung des Kunststoffschlauchs bewirkt. Alternativ sind auch andere Rohre oder Schläuche verwendbar, die porös sind, d. h. eine Vielzahl an Öffnungen in ihren Wandflächen aufweisen.

Die Hohlprofile **1** weisen bevorzugt einen äußeren Durchmesser von höchstens 2 cm, stärker bevorzugt von höchstens 1 cm, besonders bevorzugt von höchstens 6 mm auf. Die Länge der Hohlprofile **1** beträgt bevorzugt das mindestens 30-fache, stärker bevorzugt das mindestens 100-fache des Durchmessers. Die maximale Länge sollte so gewählt werden, dass auch bei Anströmung mit Gas 5 die Auslenkung der Hohlprofile **1** aus ihrer Ruheposition nicht zu groß wird, bevorzugt beträgt die maximale Länge 100 cm. Bevorzugt wird eine Vielzahl von Hohlprofilen **1** verwendet, die parallel zueinander mit gleichem Abstand (bevorzugt ist das Abstandsmaß das 1,5- bis 2,5-fache des äußeren Durchmessers der Hohlprofile **1**) nebeneinander in einer geraden oder gekrümmten Reihe angeordnet sind, wobei bevorzugt mehrere, z.B. 3 bis 20, solcher Reihen hintereinander, bevorzugt jeweils um einen halben Abstand seitlich versetzt, also lückenüberdeckend, parallel zueinander angeordnet sind. Fig. 1 zeigt zur Veranschaulichung, anders als üblicherweise ausgeführt, im linken Bereich eine fluchtende Anordnung **8,** im rechten Bereich eine versetzte Anordnung **9** der Hohlprofile **1.**

Der Gasstrom **5** wird bevorzugt senkrecht zu diesen Reihen, also im Kreuzstrom, so geführt, dass er den Flüssigkeitsfilm auf den Hohlprofiloberflächen möglichst vollständig umstreicht, und kann durch ein Gebläse erzeugt und durch Luftleitelemente geführt und verteilt werden. Dabei sollte die Geschwindigkeit des Gasstroms **5** nicht zu groß gewählt werden, um eine Erzeugung und Mitnahme von Flüssigkeitströpfchen zu vermeiden, bevorzugt nicht größer als 3 m/s. Der Flüssigkeitsfilm auf der Hohlprofiloberfläche ist bevorzugt ein Fallfilm, d. h. die Flüssigkeit **4** bewegt sich aufgrund der Schwerkraft von oben nach unten. Deshalb sind die Hohlprofile **1** mit ihrer Längserstreckung gegenüber der Waagerechten geneigt, bevorzugt zumindest im Wesentlichen senkrecht angeordnet.

Erfindungsgemäß umfasst die Vorrichtung mindestens ein Mittel zum gleichmäßigeren Verteilen der Flüssigkeit **4** über die Anzahl an porösen Hohlprofilen **1**, die im Folgenden näher beschrieben werden.

Fig. 2a zeigt eine Lage eines offenporigen Schaumstoffs **10** auf der Bodenfläche der oberen Halterung. Bevorzugt ist der Schaumstoff **10** 0,5 bis 6 cm dick, stärker bevorzugt 2 bis 4 cm dick. Alternativ kann auch eine Schicht eines Filz- oder Vliesmaterials, etwa Mineralwolle, verwendet werden.

Fig. 2b zeigt eine Schüttung **11** mit einer darunter angeordneten Gaze **12** anstelle des Schaumstoffs **10** in Fig. 2a. Die Gaze **12** verhindert das Eindringen der Schüttung **11** in die Hohlprofile **1**.

Die in Fig. 2a und Fig. 2b gezeigten Mittel führen zu einer gleichmäßigeren Verteilung der zugeführten Flüssigkeit 4 auf die einzelnen Hohlprofile **1** sowie zu einem gewissen Drosseleffekt, d. h. einer Verringerung des maximalen Flüssigkeitsstroms durch die Vorrichtung, was beides zu einer gesteigerten Effizienz des Austauschs zwischen Gas **5** und Flüssigkeit **4** führt.

Fig. 2c zeigt eine Brausevorrichtung mit einer Austrittsfläche **13** über der Bodenfläche der oberen Halterung **2.** Die Austrittsfläche **13** ist bevorzugt ein Lochblech mit eng angeordneten Löchern mit einer Größe von 0,1 bis 2 mm Durchmesser, bevorzugt 0,5 bis 1,5 mm Durchmesser, deren Abstand zueinander bevorzugt das 2- bis 5-fache des Durchmessers beträgt. Die Austrittsfläche **13** ist parallel zur Bodenfläche der oberen Halterung **2** angeordnet und überdeckt alle Eintrittsöffnungen der Hohlprofile **1** in der Bodenfläche der oberen Halterung **2.** Dadurch wird die zugeführte Flüssigkeit **4** gleichmäßig auf alle Hohlprofile **1** verteilt. Eine solche Brausevorrichtung kann mit einem flächigen Flüssigkeitsverteilmittel auf der inneren Bodenfläche der oberen Halterung, wie etwa Schaumstoff **10** oder

Schüttung **11,** kombiniert werden, um die Verteilung noch gleichmäßiger zu gestalten.

Fig. 2d zeigt Kegel **14** als Drosselmittel, die gemeinsam so an der Unterseite einer Platte befestigt sind, dass über der Eintrittsöffnung jedes Hohlprofils 1 ein Kegel angeordnet ist. Durch Verstellung der Höhe **H** der Platte ist eine Verstellung der Drosselung möglich.

Fig. 2e zeigt Einsteckhülsen **15** als Drosselmittel, die gleichzeitig die Hohlprofile **1** durch Klemmung an der Bodenplatte der oberen Halterung **2** fixieren können. Um als Drosselmittel zu wirken, muss der Innenquerschnitt der Einsteckhülse **15** deutlich geringer als der Innenquerschnitt des Hohlprofils **1** sein.

Beide Arten von oberen Drosselmitteln, wie in Fig. 2d und Fig. 2e gezeigt, verringern den Eintrittsquerschnitt der oberen Enden der porösen Hohlprofile **1** und können dadurch zu einer Aufstauung der Flüssigkeit **4** auf der Bodenplatte der oberen Halterung **2** führen, die zu einer gleichmäßigeren Flüssigkeitsverteilung auf die einzelnen Hohlprofile **1** führt. Diese oberen Drosselmittel sind mit den zuvor beschriebenen flächigen Flüssigkeitsverteilmitteln und der Brausevorrichtung kombinierbar.

Fig. 3a zeigt als Drosselmittel einen Verdrängungskörper **16** im Innenraum des Hohlprofils **1** im Bereich zwischen den oberen und den unteren Enden. Ein Draht oder Stab als Verdrängungskörper **16** verringert den Innenquerschnitt des Hohlprofils **1** und erzeugt dadurch einen Drosseleffekt. Zusätzlich wird, wie durch Pfeile in der Fig. 3a angedeutet, Flüssigkeit **4** aus dem Inneren des Hohlprofils **1** nach außen gedrängt.

Fig. 3b ähnelt Fig. 3a, zeigt jedoch eine zusätzliche Verdickung **17** am Verdrängungskörper **16.** Diese Verdickung **17** bewirkt einen zusätzlichen Drosseleffekt und eine zusätzliche Verdrängung von Flüssigkeit **4** aus dem Inneren des Hohlprofils **1** nach außen oberhalb der Verdickung **17** und einen gesteigerten Durchtritt der Flüssigkeit **4** von außen nach innen unterhalb der Verdickung **17.** Solche Verdickungen **17** werden bevorzugt mehrfach über die Länge jedes Hohlprofils **1** verteilt angebracht.

Fig. 3d ähnelt Fig. 3a., zeigt jedoch zusätzlich eine Verjüngung **18** des Hohlprofils **1,** die einen entsprechenden Effekt wie die in Fig. 3b gezeigte Verdickung **17** des Verdrängungskörpers **18** hat. Die Verjüngung **17** des Hohlprofils **1** kann jedoch auch vorgesehen werden, ohne dass ein Verdrängungskörper **16** vorhanden ist. Der Effekt ist wie für Fig. 3b beschrieben.

Drosselmittel an den porösen Hohlprofilen 1 im Bereich zwischen den oberen und den unteren Enden der Hohlprofile **1,** wie im Zusammenhang mit den Fig. 3a bis 3c beschrieben, können zu einer gleichmäßigeren Flüssigkeitsverteilung über die Länge der Hohlprofile **1** führen, indem Flüssigkeit **4** im Inneren des Hohlprofils **1** aufgestaut und somit vermehrt zum Durchtritt durch die porösen Wandungen des Hohlprofils **1** an die Außenfläche des Hohlprofils **1** geleitet wird. Dies führt zu einer verbesserten Effizienz des Austauschs, vor allem bei größeren Hohlprofillängen. Diese Art von Drosselmitteln (z. B. Verjüngung **17**) lässt sich mit den anderen Mitteln kombinieren, besonders vorteilhaft mit Mitteln zur gleichmäßigeren Flüssigkeitsverteilung auf der Bodenfläche der oberen Halterung **2** (z. B. Schaumstoff **10** oder Schüttung **11**) und mit der Brausevorrichtung.

Eine erfindungsgemäße Vorrichtung mit Brausevorrichtung erreichte gegenüber einer Vorrichtung ohne Verteilungsmittel, bei der die Flüssigkeit **4** über einen seitlichen Einlauf auf die Bodenplatte der oberen Halterung geleitet wird, bei Absorptionsversuchen eine Effizienzsteigerung von 15 % auf 37 %, d. h. eine Steigerung mit einem Faktor von fast 2,5.

In einem anderen Fall führte eine zusätzliche periodische Verjüngung **17** der Hohlprofile **1** bei Absorptionsversuchen zu einer Effizienzsteigerung von 24 % auf 34 %, d. h. einer Steigerung mit einem Faktor von 1,4, während Schaumstoff **10** als Verteilungsmittel zu einer Effizienzsteigerung von 24 % auf 29 %, d. h. einer Steigerung mit einem Faktor von 1,2 führt.

Somit führt die erfindungsgemäße Vorrichtung und das erfindungsgemäße Verfahren zu einer unerwarteten Steigerung der Effizienz des Austauschs zwischen Gas **5** und Flüssigkeit **4,** was z. B. bei der Luftreinigung die Wirksamkeit erhöhen und die Kosten senken kann.

### Bezugszeichenliste

- 1: Hohlprofil
- 2: obere Halterung
- 3: untere Halterung
- 4: Flüssigkeit
- 5: Gas
- 6: oberes Lager
- 7: unteres Lager
- 8: Bereich mit fluchtenden Hohlprofilen
- 9: Bereich mit versetzten Hohlprofilen
- 10: Schaumstoff
- 11: Schüttung
- 12: Gaze
- 13: Austrittsfläche der Brausevorrichtung
- 14: Kegel
- 15: Einsteckhülse
- 16: Verdrängungskörper
- 17: Verdickung
- 18: Verjüngung

## Patentansprüche

1. Vorrichtung zum In-Kontakt-Bringen eines Gases (5) mit einer Flüssigkeit (4), die eine Anordnung einer Anzahl an porösen Hohlprofilen (1), die zwischen einer oberen Halterung (2) mit einer Bodenfläche zur Zufuhr der Flüssigkeit (4) und einer unteren Halterung (3) zum Ablauf der Flüssigkeit (4) angebracht sind, umfasst,
**dadurch gekennzeichnet, dass** die obere Halterung (2) so gestaltet ist, dass die Flüssigkeit (4) jeweils in den Innenraum der Anzahl an porösen Hohlprofilen (1) strömen kann, dass die unteren Enden der Anzahl an porösen Hohlprofilen (1) verschlossen sind, so dass die Flüssigkeit (4) im Innenraum der Anzahl an porösen Hohlprofilen (1) nur durch die porösen Wandungen der Anzahl an porösen Hohlprofilen (1) austreten kann, und dass zusätzlich mindestens eines der folgenden Mittel zum gleichmäßigeren Verteilen der Flüssigkeit (4) über die Anzahl an porösen Hohlprofilen (1) vorhanden ist:
a) eine Brausevorrichtung zum gleichmäßig verteilten Zuführen der Flüssigkeit (4) auf die innere Bodenfläche der oberen Halterung (2),
b) ein flächiges Flüssigkeitsverteilungsmittel auf der inneren Bodenfläche der oberen Halterung (2),
c) Drosselmittel an den oberen Enden der Anzahl an porösen Hohlprofilen (1), die den Eintrittsquerschnitt der oberen Enden der Anzahl an porösen Hohlprofilen (1) verringern,
d) Drosselmittel an der Anzahl an porösen Hohlprofilen (1) im Bereich zwischen den oberen und den unteren Enden der Anzahl an porösen Hohlprofilen (1).

2. Vorrichtung nach Anspruch 1, bei der die Hohlprofile (1) gestrickte oder geflochtene Schläuche sind, bevorzugt aus thermoplastischem Kunststoff.

3. Vorrichtung nach Anspruch **1** oder 2, bei der das flächige Flüssigkeitsverteilungsmittel auf der inneren Bodenfläche der oberen Halterung (2) ein flüssigkeitsdurchlässiger Schaumstoff (10) oder eine Schüttung (11) von Partikeln ist.

4. Vorrichtung nach einem der Ansprüche 1 bis 3, bei die Drosselmittel an den oberen Enden der Anzahl an porösen Hohlprofilen (1) verstellbar sind, so dass der Eintrittsquerschnitt der oberen Enden der Anzahl an porösen Hohlprofilen (1) regulierbar ist.

5. Vorrichtung nach einem der Ansprüche 1 bis 4, bei der die Drosselmittel an der Anzahl an porösen Hohlprofilen (1) im Bereich zwischen den oberen und den unteren Enden Verjüngungen (18) der Hohlprofile (1) sind, bevorzugt wiederholte Verjüngungen in regelmäßigen Abständen.

6. Vorrichtung nach Anspruch 5, welche die Brausevorrichtung und/oder das flächige Flüssigkeitsverteilungsmittel, bevorzugt den flüssigkeitsdurchlässigen Schaumstoff, umfasst.

7. Verfahren zum In-Kontakt-Bringen eines Gases (5) mit einer Flüssigkeit (4), bei dem die Flüssigkeit (4) durch eine Vorrichtung gemäß einem der Ansprüche 1 bis 6 fließt, so dass die Anzahl an porösen Hohlprofilen (1) mit der Flüssigkeit (4) benetzt werden, und das Gas (5) an der Anzahl an flüssigkeitsbenetzten porösen Hohlprofilen (1) vorbeiströmt.

8. Verfahren nach Anspruch 7, bei dem das Gas (5) im Kreuzstrom zu der Anzahl an flüssigkeitsbenetzten porösen Hohlprofilen (1) strömt.

9. Luftreinigungsverfahren nach Anspruch 7 oder 8, bei dem das Gas (5) verunreinigte Luft und die Flüssigkeit (4) eine Absorbensflüssigkeit ist, sodass die Verunreinigungen aus der Luft zumindest teilweise durch die Absorbensflüssigkeit absorbiert werden.
